# EUROPÄISCHE PATENTSCHRIFT

(11) **EP 0 786 058 B1**
(45) Veröffentlichungstag und Bekanntmachung des Hinweises auf die Patenterteilung: **23.09.1998**
(21) Anmeldenummer: 95936469.6
(22) Anmeldetag: 11.10.1995
(51) Int. Cl.: F16H 57/04

(54) **AUTOMATGETRIEBE, INSBESONDERE FÜR KRAFTFAHRZEUGE**
AUTOMATIC GEARBOX, IN PARTICULAR FOR MOTOR VEHICLES
BOITE DE VITESSES AUTOMATIQUE, NOTAMMENT POUR VEHICULES A MOTEUR

(30) Priorität: 13.10.1994 DE 4436505
(43) Veröffentlichungstag der Anmeldung: 30.07.1997
(73) Patentinhaber: ZF FRIEDRICHSHAFEN Aktiengesellschaft, 88038 Friedrichshafen (DE)
(72) Erfinder: HÜBLER, Wolfgang, D-88693 Deggenhausertal (DE); MARTIN, Gerhard, D-88085 Langenargen (DE); TIESLER, Peter, D-88074 Meckenbeuren (DE)
(86) Internationale Anmeldenummer: EP9504001
(87) Internationale Veröffentlichungsnummer: WO9612125

(56) Entgegenhaltungen:
- DE-A- 4 200 910
- FR-A- 2 443 598
- US-A- 3 620 646
- US-A- 5 211 262

## Beschreibung

Die Erfindung betrifft ein Automatgetriebe, insbesondere für Kraftfahrzeuge, mit einer Verdrängerpumpe für die Versorgung eines hydrodynamischen Wandlers, einer Schmiereinrichtung und von Steuer- und Betätigungseinrichtungen des Automatgetriebes über eine Anzahl von Steuerkanälen, wobei die Verdrängerpumpe mit der Drehzahl des Antriebsmotors angetrieben wird und wobei der Verdrängerpume zu ihrer Aufladung ein Überschußstrom von unter Druck stehendem Druckmittel zugeführt wird.

Bei derartigen bekannten Automatgetrieben sind die Pumpen sogenannte Konstantpumpen, das heißt, daß bei jeder Umdrehung des Antriebsmotors und damit der Verdrängerpumpe ein konstantes Fördervolumen geliefert wird. Der Förderstrom einer solchen Pumpe steigt proportional mit ihrer Antriebsdrehzahl an. Die Auslegung der Pumpe erfolgt im allgemeinen bei einer Leerlaufdrehzahl. Der dabei gelieferte Förderstrom muß bereits die Anforderungen des zu versorgenden Getriebes erfüllen.

Eine derartige Pumpe fördert bei höheren Drehzahlen ein Mehrfaches der erforderlichen Menge. Eine entsprechend große Druckmittelmenge muß angesaugt werden. Bei höheren Drehzahlen kommt es deshalb zu Kavitation und Druckschwingungen. Kavitation bedeutet Geräusche, Druckschwingungen verursachen Steuerungsprobleme.

Aus der DE-A1-42 00 910 ist ein Automatgetriebe bekannt, bei dem die Pumpe durch einen Überschußstrom aufgeladen wird. Der Überschußstrom kommt aus einem Stromregelventil oder einem Druckregelventil. Der Überschußstrom fließt dabei aus einer Druckbohrung des Strom- oder Druckregelventils in eine Querbohrung, reißt dabei aus einer Saugbohrung, die mit einem Behälter in Verbindung steht, Druckmittel mit und strömt von dort in die Saugniere der Verdrängerpumpe.

Für die Aufladung der Verdrängerpumpe ist somit ein relativ hoher Aufwand erforderlich: Ein Strom- bzw. Druckregelventil muß in einer zusätzlich bearbeiteten Bohrung des Pumpengehäuses eingebaut werden. Die Querbohrung muß sehr genau bearbeitet werden, damit sie in der richtigen Beziehung zu den Steuerkanten des Strom- bzw. Druckregelventils steht. Außerdem wird für das Strom- bzw. Druckregelventil ein bestimmter Einbauraum in dem Automatgetriebe benötigt.

Aus der US-A-3 620 646 ist ein Automatgetriebe bekannt, bei dem ein Überschußstrom eines Stromregelventils zur Aufladung einer Verdrängerpumpe verwendet wird. Dabei ist der Überschußstrom mengenabhängig. Der Druck im Automatgetriebe wird nicht berücksichtigt.

Eine andere Anordnung einer Strahlaufladung für eine Innenzahnradpumpe zeigt die FR-A-2 443 598. Dabei wird ein Aufladestrahl einer Innenzahnradpumpe koaxial zu einem Ansaugstrom eingeleitet. Diese Anordnung läßt sich nur schwer herstellen.

Außerdem ist bei dieser Anordnung zwischen der Aufladedüse und der Saugniere ein im Verhältnis zur Länge des Injektors sehr großer Abstand vorhanden. Dieser Abstand ist durch einen an die Düse anschließenden Diffusor und ein daran anschließendes Mischrohr vorgegeben.

Ein ähnlich großer Abstand im Verhältnis zu der Länge der Aufladedüse ist ebenfalls in der US-A-3 620 646 gegeben.

Der Erfindung liegt die Aufgabe zugrunde, ein Automatgetriebe zu schaffen, bei dem die Aufladung der Verdrängerpumpe kostengünstig mit einfachen Mitteln realisiert wird und dabei möglichst wenig Raum beansprucht.

Diese Aufgabe wird durch das im Anspruch 1 gekennzeichnete Automatgetriebe gelöst. Die Lösung besteht darin, daß bei einem Automatgetriebe nach dem Oberbegriff des Anspruchs 1 die Aufladedüse nahe der Saugzone der Verdrängerpumpe in einen mit einem Behälter verbundenen Saugkanal mündet.

Vorteilhafte und zweckmäßige Ausgestaltungen der Erfindung sind in den Unteransprüchen angegeben. Der Aufladekanal und die Aufladedüse lassen sich besonders einfach dadurch herstellen, daß sie in dem Pumpengehäuse fertiggegossen werden. Dadurch kann auch auf einfache Art und Weise ihr Querschnitt stetig verringert werden, so daß das Druckmittel ohne Umlenk- oder Stoßverluste der Verdrängerpumpe zugeführt werden kann.

Wenn die Verdrängerpumpe als Innenzahnradpumpe ausgebildet wird, so wird zweckmäßigerweise ein Treibstrom, der aus dem Überschußstrom des Hauptdruckventils entsteht und der die Aufladedüse durchströmt, tangential zur Mittellinie einer Saugniere der Innenzahnradpumpe gerichtet. Um die Geschwindigkeitsenergie des Treibstromes voll ausnützen zu können, wird der Treibstrom in die Bewegungsrichtung des inneren Pumpenrades der Innenzahnradpumpe gerichtet.

Als Winkel zwischen dem die Aufladedüse durchströmenden Treibstrom und dem den Saugkanal durchströmenden Saugstrom hat sich ein Winkel von 10° bis 60° als vorteilhaft erwiesen.

Die besondere Nähe der Aufladedüse an der Saugzone der Verdrängerpumpe ist gekennzeichnet dadurch, daß der Abstand der Düse von einer in der Saugzone angeordneten Saugniere zu der Länge des Aufladekanals, in der sich dessen Querschnitt stetig verringert, in einem Verhältnis von 1:2 bis 1:5 liegt. Bei den Ausführungen nach dem oben beschriebenen Stand der Technik ist das Verhältnis jeweils mehr als umgekehrt.

Im folgenden wird die Erfindung anhand eines in der Zeichnung dargestellten Ausführungsbeispieles näher erläutert. Es zeigen:
- Fig.1: einen Teil-Längsschnitt durch das Automatgetriebe im Bereich der Verdrängerpumpe;
- Fig. 2: eine Draufsicht auf das Pumpengehäuse gemäß dem Pfeil II in Fig. 1 und
- Fig. 3: einen Teilschnitt im wesentlichen gemäß der Linie III-III in Fig. 2.

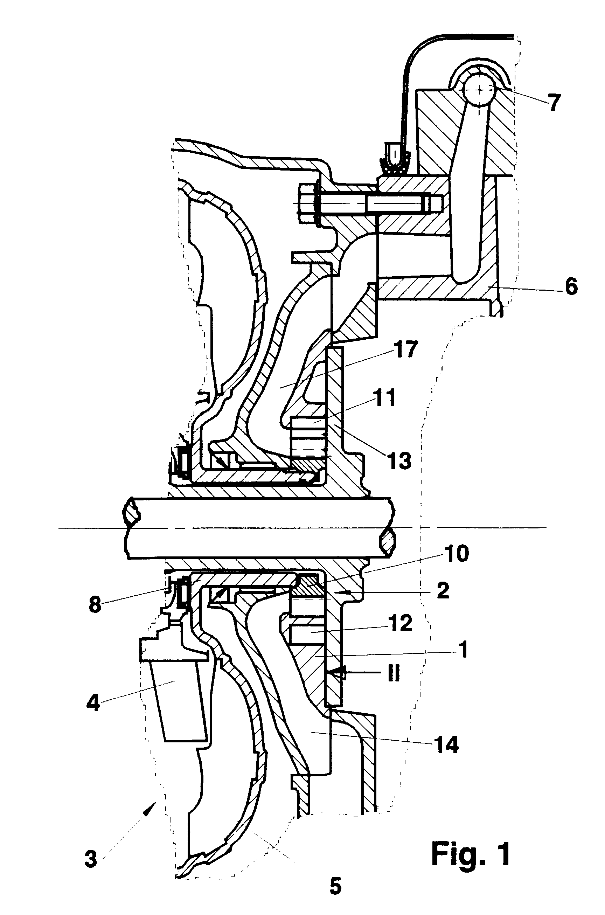

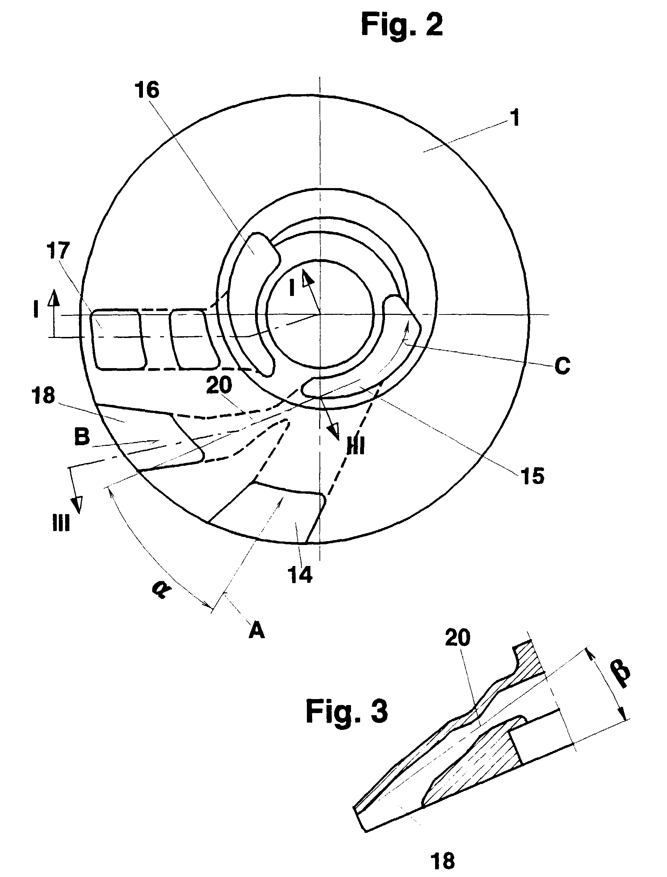

Der Längsschnitt der Fig. 1 folgt zwei Schnittebenen: Die obere Schnitthälfte folgt im wesentlichen der Linie I-I in Fig. 2, die untere Schnitthälfte folgt im wesentlichen dem Pfeil A und führt zum Zentrum des Automatgetriebes.

Im Inneren des Automatgetriebes ist in einem Pumpengehäuse 1 eine Verdrängerpumpe in der Form einer Innenzahnradpumpe 2 angeordnet. Benachbart zu der Innenzahnradpumpe 2 ist ein hydrodynamischer Wandler 3 angeordnet, von dem nur ein Leitrad 4 und ein Pumpenrad 5 gezeigt sind. Auf der anderen Seite der Innenzahnradpumpe 2 liegt das eigentliche Getriebe, von dem nur ein Teil eines Getriebegehäuses 6 und ein Hauptdruckventil 7 dargestellt sind.

Auf einem Wandlerhals 8, der mit dem Pumpenrad 5 fest verbunden ist, ist ein außenverzahntes Innenrad 10 befestigt. Das Innenrad 10 kämmt-mit einem innenverzahnten Hohlrad 11. Die Ausbildung des Innenrades 10 und des Hohlrades 11 ist allgemein bekannt, beispielsweise aus der DE 30 05 657 C2. Da das Pumpenrad 5 mit der Drehzahl eines nicht dargestellten Antriebsmotors dreht, wird auch das Innenrad 10 mit dieser Motordrehzahl angetrieben.

Zwischen dem Innenrad 10 und dem Hohlrad 11 gebildete Arbeitskammern 12 werden auf der Wandlerseite in axialer Richtung von dem Pumpengehäuse 1 und auf der Getriebeseite durch eine Trennscheibe 13 begrenzt.

Die Innenzahnradpumpe 2 saugt durch einen Saugkanal 14 aus einem nicht dargestellten Behälter Druckmittel in eine Saugniere 15 an. Das Druckmittel wird aus einer Druckniere 16 durch einen Druckkanal 17 zu dem Hauptdruckventil 7 gefördert. Der Aufbau und die Funktion des Hauptdruckventiles 7 ist nicht erfindungswesentlich und wird deshalb nicht näher beschrieben. Wichtig ist lediglich, daß nicht benötigtes, unter Hochdruck stehendes Druckmittel in einem Überschußstrom von dem Hauptdruckventil 7 abströmt und durch einen in dem Pumpengehäuse 1 angeordneten Aufladekanal 18 der Saugseite der Innenzahnradpumpe 2 zugeführt wird. Der Aufladekanal ist in den Fig. 2 und 3 dargestellt. Sein weiterer Verlauf bis zu dem Hauptdruckventil 7 entspricht dem Verlauf des Druckkanals 17 in Fig. 1.

Der Querschnitt des Aufladekanals 18 verringert sich in Richtung auf die Innenzahnradpumpe 2 hin stetig so weit, bis der Aufladekanal 18 an seinem der Innenzahnradpumpe 2 zugewandten Ende eine Aufladedüse 20 bildet. Der Aufladekanal 18 mündet mit seiner Aufladedüse 20 nahe bei der Saugzone, das heißt bei der Saugniere 15, mit dem Saugkanal 14 zusammen. Der Aufladekanal 18 und die Aufladedüse 20 sind in dem Pumpengehäuse 1 integriert und können ganz besonders kostengünstig und mit stetiger Querschnittsverringerung dadurch in dem Pumpengehäuse 1 ausgebildet werden, daß sie fertiggegossen werden. Eine Herstellung des Aufladekanals 18 und der Aufladedüse 20 ist grundsätzlich auch spanabhebend oder durch Einbau eines die beiden Teile enthaltenden Einsatzstückes möglich.

Ein Treibstrom, der in Richtung des Pfeiles B den Aufladekanal 18 und die Aufladedüse 20 durchströmt, ist vorteilhafterweise tangential zur Mittellinie der Saugniere 15 der Innenzahnradpumpe 2 gerichtet. Das Innenrad 10 und das Hohlrad 11 bewegen sich in Richtung des Pfeiles C. Wenn der Treibstrom durch die Aufladedüse 20 ebenfalls in der Richtung dieses Pfeiles C gerichtet ist, so ergibt sich eine besonders gute Aufladung der Innenzahnradpumpe 2, bei der eine ausreichende Menge von Druckmittel aus dem Saugkanal 14 mitgerissen wird.

Eine besonders gute Vermischung des Treibstromes aus der Aufladedüse 20 und des Saugstromes aus dem Saugkanal 14 und damit eine besonders gute Aufladung ergibt sich dann, wenn zwischen den beiden Strömen ein Winkel α zwischen 10° und 60° eingeschlossen ist.

In Fig. 3 liegen der Aufladekanal 18 und die Aufladedüse 20 unter einem bestimmten Winkel β zu den Stirnflächen des Innenrades 10 und des Hohlrades 11. Der Winkel β beträgt in dem Ausführungsbeispiel etwa 10° bis 15°. Der Aufladestrahl muß deshalb vor seinem Eintrit in die Saugniere 15 umgelenkt werden. Ein Winkel β von 10° bis 15° ist bei dem Ausführungsbeispiel erforderlich wegen des geringen, zur Verfügung stehenden Bauraumes in Richtung auf den Wandler 3. Ein kleinerer Winkel β bzw. eine Anordnung des Aufladekanals 18 und der Aufladedüse 20, bei der der Aufladestrahl hinter der Aufladedüse 20 nicht umgelenkt werden müßte, wäre strömungstechnisch vorteilhafter, würde jedoch den erforderlichen Einbauraum vergrößern.

### Bezugszeichen

- 1: Pumpengehäuse
- 2: Innenzahnradpumpe
- 3: Wandler
- 4: Leitrad
- 5: Pumpenrad
- 6: Getriebegehäuse
- 7: Hauptdruckventil
- 8: Wandlerhals
- 9: -
- 10: Innenrad
- 11: Hohlrad
- 12: Arbeitskammer
- 13: Trennscheibe
- 14: Saugkanal
- 15: Saugniere
- 16: Druckniere
- 17: Druckkanal
- 18: Aufladekanal
- 19: -
- 20: Aufladedüse

## Patentansprüche

1. Automatgetriebe, insbesondere für Kraftfahrzeuge, mit einer Verdrängerpumpe für die Versorgung eines hydrodynamischen Wandlers (3), einer Schmiereinrichtung und von Steuer- und Betätigungseinrichtungen des Automatgetriebes über eine Anzahl von Steuerkanälen,
- wobei die Verdrängerpumpe mit der Drehzahl eines Antriebsmotors angetrieben wird;
- wobei der Verdrängerpumpe zu ihrer Aufladung durch einen Aufladekanal (18) mit einer Aufladedüse (20) ein Überschußstrom von unter Druck stehendem Druckmittel aus einem Hauptdruckventil (7) des Automatgetriebes zugeführt wird und
- wobei der Aufladekanal (18) einen sich stetig in Richtung auf die Verdrängerpumpe hin verringernden Querschnitt und an seinem der Verdrängerpumpe zugewandten Ende die Aufladedüse (20) aufweist,
dadurch **gekennzeichnet**,
- daß die Aufladedüse (20) nahe der Saugzone der Verdrängerpumpe in einen mit einem Behälter verbundenen Saugkanal (14) einmündet, so daß eine Vereinigung eines durch die Aufladedüse (20) strömenden Treibstromes mit einem durch den Saugkanal (14) strömenden Saugstrom unmittelbar an einer in der Saugzone angeordneten Saugniere (15) erfolgt und
- daß die Aufladedüse (20) in einem Pumpengehäuse (1) integriert ist.

2. Automatgetriebe nach Anspruch 1, dadurch **gekennzeichnet,** daß der Aufladekanal (18) und die Aufladedüse (20) in dem Pumpengehäuse (1) fertiggegossen sind.

3. Automatgetriebe nach Anspruch 2, dadurch **gekennzeichnet**, daß die Verdrängerpumpe eine Innenzahnradpumpe (2) ist.

4. Automatgetriebe nach Anspruch 3, dadurch **gekennzeichnet**, daß ein die Aufladedüse (20) durchströmender Treibstrom tangential zur Mittellinie einer Saugniere (15) der Innenzahnradpumpe (2) gerichtet ist.

5. Automatgetriebe nach Anspruch 3, dadurch **gekennzeichnet**, daß der Treibstrom in Bewegungsrichtung eines Innenrades (10) und eines Hohlrades (11) der Innenzahnradpumpe (2) gerichtet ist.

6. Automatgetriebe nach einem der Ansprüche 4 oder 5, dadurch **gekennzeichnet,** daß zwischen dem die Aufladedüse (20) durchströmenden Treibstrom und dem den Saugkanal (14) durchströmenden Saugstrom ein Winkel (α) von 10° bis 60° eingeschlossen ist.

## Claims

1. Automatic gearbox, more particularly for motor vehicles, with a displacement pump for supplying a hydrodynamic converter (3), a lubricating device and control and actuating devices of the automatic gearbox via a plurality of control ducts,
- the displacement pump being driven with the rotational speed of a drive motor;
- the displacement pump being supplied for its supercharging via a supercharging duct (18) with a supercharging nozzle (20) with an excess flow of pressurised pressure medium from a main pressure valve (7) of the automatic gearbox and
- the supercharging duct (18) comprising a cross section narrowing gradually in the direction of the displacement pump and comprising the supercharging nozzle (20) at its end facing the displacement pump,
characterised in that
- the supercharging nozzle (20) opens in the vicinity of the suction zone of the displacement pump into a suction duct (14) connected to a receptacle, so that there is a joining of a charge flow flowing through the supercharging nozzle (20) with a suction flow flowing through the suction duct (14) at a suction pocket (15) arranged in the suction zone and
- the supercharging nozzle (20) is integrated in a pump housing (1).

2. Automatic gearbox according to claim 1, characterised in that the supercharging duct (18) and the supercharging nozzle (20) are finish-cast in the pump housing (1).

3. Automatic gearbox according to claim 2, characterised in that the displacement pump is an internal gear pump (2).

4. Automatic gearbox according to claim 3, characterised in that a charge flow flowing through the supercharging nozzle (20) is aligned tangentially to the centre line of a suction pocket (15) of the internal gear pump (2).

5. Automatic gearbox according to claim 3, characterised in that the charge flow is aligned in the direction of movement of an internal gear (10) and a hollow gear (11) of the internal gear pump (2).

6. Automatic gearbox according to one of claims 4 or 5, characterised in that an angle (α) of 10° to 60° is enclosed between the charge flow flowing through the supercharging nozzle (20) and the suction flow flowing through the suction duct (14).

## Revendications

1. Boîte de vitesses automatique, notamment pour véhicules automobiles, comportant une pompe volumétrique pour l'alimentation d'un convertisseur hydrodynamique (3), d'un dispositif de lubrification et de dispositifs de commande et d'actionnement de la boîte de vitesses automatique au moyen d'un nombre de conduits de commande,
- dans lequel la pompe volumétrique est entraînée à la vitesse d'un moteur d'entraînement;
- dans lequel la pompe volumétrique est alimentée au moyen d'un canal de suralimentation (18) comportant une tuyère de suralimentation (20) avec un courant en excès d'un fluide sous pression à partir d'une soupape de compression principale (7) de la boîte de vitesses automatique, et
- dans lequel le canal de suralimentation (18) présente une section transversale se réduisant progressivement en direction de la pompe volumétrique et comporte la tuyère de suralimentation (20) à son extrémité tournée vers la pompe volumétrique,
**caractérisée**
- en ce que la tuyère de suralimentation (20) débouche près de la zone d'aspiration de la pompe volumétrique dans un canal d'aspiration (14) relié à un réservoir de façon qu'une réunion d'un courant de fluide moteur passant par la tuyère de suralimentation (20) et d'un courant d'aspiration passant à travers le canal d'aspiration (14) se produit immédiatement sur un dispositif d'aspiration en forme de moule (15) agencé dans la zone d'aspiration, et
- en ce que la tuyère de suralimentation (20) est intégrée dans un corps de pompe (1).

2. Boîte de vitesses automatique selon la revendication 1, **caractérisée** en ce que le canal de suralimentation (18) et la tuyère de suralimentation (20) sont coulés dans le corps de pompe (1).

3. Boîte de vitesses automatique selon la revendication 2, **caractérisée** en ce que la pompe volumétrique est une pompe à couronne dentée intérieure (2).

4. Boîte de vitesses automatique selon la revendication 3, **caractérisée** en ce qu'un courant de fluide moteur passant par la tuyère de suralimentation (20) est dirigé de manière tangentielle par rapport à la ligne centrale d'un dispositif d'aspiration en forme de moule (15) de la pompe à couronne dentée intérieure (2).

5. Boîte de vitesses automatique selon la revendication 3, **caractérisée** en ce que le courant du fluide moteur est dirigé dans le sens du mouvement d'une roue intérieure (10) et d'une roue creuse (11) de la pompe à couronne dentée intérieure (2)

6. Boîte de vitesses automatique selon l'une des revendications 4 ou 5, **caractérisée** en ce qu'un angle (a) de 10° à 60° est enfermé entre le courant du fluide moteur passant par la tuyère de suralimentation (20) et le courant d'aspiration passant à travers le canal d'aspiration (14).
